(19)

Europäisches
Patentamt

European
Patent Office

Office européen
des brevets

(11) **EP 2 671 956 A1**

(12) **EUROPEAN PATENT APPLICATION**

(43) Date of publication:
**11.12.2013 Bulletin 2013/50**

(51) Int Cl.:
***C22C 14/00*** *(2006.01)*   ***C22F 1/18*** *(2006.01)*

(21) Application number: **13002317.9**

(22) Date of filing: **30.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.06.2012 JP 2012127263
28.03.2013 JP 2013070180**

(71) Applicant: **Kabushiki Kaisha Kobe Seiko Sho
(Kobe Steel, Ltd.)
Kobe-shi, Hyogo 651-8585 (JP)**

(72) Inventors:
• **Konno, Takashi
Takasago-shi, Hyogo, 676-8670 (JP)**
• **Tatsumi, Akihiko
Kobe-shi, Hyogo, 651-2271 (JP)**
• **Yanagisawa, Kasumi
Kobe-shi, Hyogo, 651-2271 (JP)**
• **Itsumi, Yoshio
Takasago-shi, Hyogo, 676-8670 (JP)**
• **Oyama, Hideto
Takasago-shi, Hyogo, 676-8670 (JP)**

(74) Representative: **Müller-Boré & Partner
Patentanwälte
Grafinger Straße 2
81671 München (DE)**

(54) **Titanium alloy material excellent in scale deposition inhibiting property and formability and a method of producing the same, as well as a heat exchanger or a seawater evaporator**

(57)   The titanium alloy material of the invention is excellent in a deposition inhibiting property of scales mainly comprising calcium carbonate contained in water and exhibits an excellent formability during manufacture of a heat exchanger or the like. The titanium alloy material of the invention contains P in an amount of 0.005 to 0.30% (mass% here and hereinafter) and Sn in an amount of 0.01 to 3.0%, with the balance of Ti and unavoidable impurities. Further, in a case where the titanium alloy material contains one or more elements selected from the group consisting of Cu, Fe, and Ni, they may satisfy the following formula (1):

$$\mathrm{Cu} + 4.9\mathrm{Fe} + 1.3\mathrm{Ni} + 0.5\mathrm{Sn} \leq 1.6 \cdots\cdots (1)$$

in which Cu, Fe, Ni and Sn each represent the content (mass%) of the respective elements in the titanium alloy in the formula (1).

EP 2 671 956 A1

**Description**

BACKGROUND OF THE INVENTION

Field of the Invention

The present invention relates to a titanium alloy material excellent in scale deposition inhibiting property and formability and a method of producing the same, and it relates to a titanium alloy material excellent in deposition inhibiting property of scales comprising calcium carbonate contained as a main ingredient in water and exhibiting excellent formability when used, for example, in the manufacture of a heat exchanger, and a method of producing the same.

Description of the Related Art

For heat exchangers (for example, plate type heat exchangers) or seawater evaporators (seawater desalination equipment), titanium or titanium alloy materials (hereinafter sometimes referred to as "titanium material") of high corrosion resistance are often used. The titanium material that constitutes at least a portion of the heat exchanger or the seawater evaporator is in contact with water such as underground water, service water, and seawater. Water described above contains a trace amount of calcium ions ($Ca^{2+}$) or hydrogen carbonate ions ($HCO_3^-$). It has been known that when the water is heated in the heat exchanger or the seawater evaporator, calcium carbonate ($CaCO_3$) is formed as shown by the following reaction formula and scales comprising calcium carbonate as a main ingredient (hereinafter sometimes referred to simply as "scales") are deposited to the surface of the titanium material:

$$Ca^{2+} + 2HCO_3^- \rightarrow Ca(HCO_3)_2 \rightarrow CO_2 + H_2O + CaCO_3$$

The reaction tends to proceed more as the temperature goes higher. Since water heated in the heat exchanger or the seawater evaporator is heated to a high temperature region from 60°C to a boiling point, scales tend to be formed on the surface of the titanium material. In a case where the titanium material constitutes a heat transfer portion of the heat exchanger or the seawater evaporator, if a great amount of scales are deposited to the titanium material, heat transferability of the equipment is deteriorated. Accordingly, periodical operation of removing the scales deposited on the surface of the titanium material is necessary at a frequency once per month or per year, which imposes a problem of increasing a maintenance cost.

In view of the problem described above, a descaler has been proposed for efficient maintenance of descaling (for example, in Japanese Patent No. 3647843). The technique proposes, a descaler containing oxycarboxylic acid, sulfamic acid, and ammonium sulfate as an effective ingredient and shows that scales deposited on the surface of metal material are removed efficiently.

The existent art described above does not inhibit deposition of scales per se and this is not a technique capable of reducing the maintenance frequency. Further, since manufacture of the heat exchanger or the seawater evaporator includes a fabricating step of a complicate shape, excellent formability is also required for the titanium material to be used.

SUMMARY OF THE INVENTION

The present invention has been achieved in view of the situation as described above and it intends to provide a titanium alloy material excellent in the deposition inhibiting property of scales mainly comprising calcium carbonate contained in water and exhibiting excellent formability in the manufacture of the heat exchanger or the like. The invention further intends to establish a method capable of efficiently producing the titanium alloy without causing cracking in a production step.

A titanium alloy of the invention capable of solving the problem comprises P in an amount of 0.005 to 0.30 mass% and Sn in an amount of 0.01 to 3.0 mass%, with the balance of Ti and unavoidable impurities.

The titanium alloy material may further contain at least one or more elements selected from the group consisting of Cu, Fe, and Ni so as to satisfy the following formula (1):

$$Cu + 4.9Fe + 1.3Ni + 0.5Sn \leq 1.6 \qquad (1)$$

in which Cu, Fe, Ni and Sn represent the content (mass%) of the respective elements in the titanium alloy in the formula (1).

Further, the content of Cu in the titanium alloy material is preferably 0.3 mass% or less.

The titanium alloy material preferably has an average crystal grain size of 10 $\mu$m or more.

The titanium alloy material can be used, for example, in a heat exchanger or a seawater evaporator.

The invention also includes a heat exchanger or a seawater evaporator in which a titanium alloy material is used for a heat transfer portion where water or seawater is caused to flow as a thermal medium.

The titanium alloy material of the invention can be produced by using, as a P source, at least one P-containing compound selected from the group consisting of Sn-P mother alloy, Cu-P mother alloy, Fe-P mother alloy, Ni-P mother alloy, and Ti-P mother alloy for starting material.

The invention also includes a method of producing a titanium alloy material. The production method includes melting and casting a melting material and then performing at least hot working thereby producing the titanium alloy material, in which a P-containing compound is melted together with titanium as the melting material in the melting step.

Further the invention also includes another method of producing the titanium alloy material, the production method producing the titanium alloy material by melting and casting a melting material and then performing at least hot working including bloom forging or bloom rolling in which the heating temperature of the bloom forging or bloom rolling is 890°C or higher.

The production method preferably includes a step of heat treating the titanium alloy material till the average crystal grain size increases to 10 $\mu$m or more after further performing cold rolling after the hot working.

According to the invention, when the titanium alloy material is used, for example, in a heat exchanger, a seawater evaporator, etc. since deposition of scales mainly comprising calcium carbonate contained in water is inhibited, frequency of maintenance can be decreased. Further, since the titanium alloy material of the invention is excellent in formability, a heat exchanger, etc. of a complicate shape can be formed easily.

BRIEF DESCRIPTION OF THE DRAWINGS

Fig. 1 is a graph illustrating a relation between mother alloys to be used and deposition inhibiting effect;
Fig. 2 is a graph illustrating a relation between the content of P to  be added and a forgeable temperature.

DETAILED DESCRIPTION OF THE PREFERRED EMBODIMENTS

The present inventors at first have found that P and Sn may be within the range described below in order to improve both of characteristics of deposition inhibiting property of scales mainly comprising calcium carbonate contained in water (hereinafter referred to as "scale deposition inhibiting property") and excellent formability necessary in the manufacture of the heat exchanger or the like together.

It has also been found that in a case of using a P-containing compound (compound of P and other elements, for example, Cu, etc.) easy to handle with during manufacture, when the P-containing compound is used within a range where Cu or the like satisfies the formula (1) to be described later, excellent formability can be ensured while suppressing undesired effect caused by the elements other than P (Cu, etc. described above) on the formability.

The reason for determining the range of ingredients such as P, Sn and the like is to be described specifically.

[P: 0.005 to 0.30 mass%]

P has an effect of inhibiting the deposition of scales when the titanium alloy is in contact with water (underground water, service water, seawater, etc.), since a trace amount of P is dissolved, together with Sn to be described later, from the titanium material into water to inhibit growing of crystals of calcium carbonate represented by the reaction formula described above. P is scarcely solid solubilized in the $\alpha$-phase titanium and tends to be present as precipitates ($Ti_3P$). Accordingly, it is considered that the effect of inhibiting scale deposition is obtained when the P is contained even by a trace amount. However, since quantitative detection is impossible at an extremely low content, the lower limit for the amount of P is defined as 0.005 mass% or more, which can be detected quantitatively. It is preferably 0.010 mass% or more and, more preferably, 0.050 mass% or more.

On the other hand, if P is contained in excess of 0.30 mass%, precipitates ($Ti_3P$) in the material become excessive to deteriorate the formability. As a result, it is difficult to be applied to a heat exchanger or a seawater evaporator which is required to be fabricated into a complicate  shape. Accordingly, in the invention, the amount of P is defined as 0.30 mass% or less. It is preferably 0.25 mass% or less, more preferably, 0.20 mass% or less and, further preferably, 0.15 mass% or less.

[Sn: 0.01 to 3.0 mass%]

As has been described above, when the titanium material is in contact with water (underground water, service water, seawater, etc.), Sn is dissolved in a trace amount together with P from the titanium alloy into water thereby inhibiting crystals of calcium carbonate from growing to inhibit deposition of the scales. In order to attain the effect, the amount of Sn is defined as 0.01 mass% or more. It is preferably 0.05 mass% or more and, more preferably, 0.10 mass% or more.

Further, Sn less deteriorates ductility in alloying addition compared with other elements and it does not remarkably deteriorate the formability (ductility) by the addition amount within 3.0 mass% even when considering that Sn is added together with P. Accordingly, the upper limit for the amount of Sn is defined as 3.0 mass% in the invention. With a view point of ensuring higher formability, it is preferably 1.5 mass% or less and, more preferably, 1.0 mass% or less.

The basic composition of the titanium alloy material according to the invention is as described above and the balance comprises Ti and unavoidable impurities. The titanium alloy material generally contains unavoidable impurities derived from the starting materials such as ores and due to production process. In the production of pure titanium for industrial use, the content of Fe and O in the unavoidable impurities is controlled for adjusting the balance between strength and ductility by selecting the starting materials in which the content of Fe and O are different. Also in this invention, since the unavoidable impurities give no adverse effect on the effect of the invention per se, the content of Fe or O may be controlled by selecting the starting material thereby adjusting the balance between the strength and the ductility. Table 1 shows examples of the content of unavoidable impurities in the starting titanium material (starting material for melting). Table 1 shows examples measured for the content of the unavoidable impurities but they do not show the range of the content of the unavoidable impurities in the invention. The content of the unavoidable impurities varies depending on the lot of the starting material. Improvement of the strength can be expected by using a starting titanium material with large amount of Fe and O as in Example 2 of Table 1. On the other hand, further improvement can be expected in the formability by using a starting titanium material at high purity with the content of the unavoidable impurities being suppressed as Example 1 of Table 1.

When a P-Fe mother alloy is used as the P-containing compound, that is, Fe is added positively, since Fe is contained in the titanium alloy material in an amount exceeding the level of unavoidably impurities, the strength can be improved naturally.

Elements constituting the unavoidable impurities can be measured by a customary method. Measurement was performed by an inert gas fusion method for O and N, by an after combustion infrared absorption method for C, and an ICP atomic emission spectroscopy for other elements in Table 1.

Table 1

| Element | Example 1 (mass%) | Example 2 (mass%) |
|---|---|---|
| C | 0.005 | 0.01 |
| Fe | 0.024 | 0.068 |
| Si | 0.005 | 0.005 |
| Ni | <0.01 | <0.01 |
| Cr | <0.01 | <0.01 |
| Pd | <0.01 | <0.01 |
| N | 0.002 | 0.003 |
| O | 0.047 | 0.134 |

By the way, since elemental P has high vapor pressure and reactivity, it is difficult to be added by an existent titanium alloy melting method. Then, the titanium alloy material containing P can be produced by using a P-containing compound as a P source for the melting material. The P-containing compound includes a Ti-P mother alloy but since Sn-P mother alloy, Cu-P mother alloy, Fe-P mother alloy, and Ni-P mother alloy are less expensive and available more easily and contain P at a higher concentration than the Ti-P mother alloy, they can be industrially used more easily. Accordingly, it is preferred to use at least one of the Sn-P mother alloy, Cu-P mother alloy, Fe-P mother alloy, and Ni-P mother alloy.

However, when the P-containing compound described above is used, alloying elements (Cu, Fe, Ni) added together with P may deteriorate the ductility (formability). Further, Sn described above also deteriorates the ductility. Then, when such P-containing compound is used, it is necessary to control the content of the alloying elements (Sn, Cu, Fe, Ni) so as not to deteriorate in the ductility remarkably.

For the trend of deteriorating the ductility by each of the alloying elements, it has been known that Sn less deteriorates the ductility by alloying addition as described above and also Cu less deteriorates the ductility by alloying addition in the same manner as Sn. On the other hand, since Fe diffuses rapidly in the titanium material, it tends to be segregated and deteriorate the workability (formability) even by addition in small amount. On the contrary, Ni is an element that causes less segregation but brings about deterioration in the formability.

The present inventors produced titanium alloy materials of compositions shown in Table 2 (in which the balance comprises Ti and unavoidable impurities, the amount of P is less than the prescribed lower limit, blanks in Table 2 shows no addition of elements) by arc melting, to obtain titanium alloy materials having various contents of each of Cu, Fe, Ni, and Sn. Then, elongation of the obtained titanium alloy materials was measured as shown in the examples described below to investigate the effect of the content of the alloying elements (Cu, Fe, Ni, and Sn) on the formability (elongation).

Table 2

| No. | Composition (mass%) | | | | | Elongation (%) |
|---|---|---|---|---|---|---|
| | O | Fe | Sn | Cu | Ni | |
| a | 0.10 | 0.05 | | | | 44.1 |
| b | 0.10 | 0.05 | 1 | | | 38.0 |
| c | 0.10 | 0.05 | 2 | | | 39.0 |
| d | 0.10 | 0.05 | 3 | | | 38.1 |
| e | 0.10 | 0.05 | | 1 | | 36.6 |
| f | 0.10 | 0.05 | | 2 | | 34.0 |
| g | 0.10 | 0.05 | | | 2 | 29.4 |
| h | 0.06 | 0.10 | | | | 43.1 |
| i | 0.06 | 0.30 | | | | 37.4 |

Specifically, the effect of the Sn content on the deterioration of elongation was investigated by comparison between sample No. a as a comparative material prepared with no addition of alloying elements and samples Nos. b-d of various Sn contents. As a result, the amount of deterioration in elongation per 1 mass% of the Sn content was [(44.1 - 38.0) + (44.1 - 39.0) + (44.1 - 38.1)]/(1 + 2 + 3) = 2.87%.

In the same manner, the effect of the Cu content on the deterioration of elongation was investigated by comparison between the sample No. a and samples Nos. e, f of various Cu contents. As a result, deterioration of elongation per 1 mass% of the Cu content was 5.87%. Further, the effect of the Ni content was investigated by comparison between the sample No. a and a sample No. g. As a result, deterioration of elongation per 1 mass% of the Ni content was 7.35%.

In the investigation of the effect of the Fe content on the deterioration of elongation, since the content of O is greatly different between the sample No. a and samples Nos. h and i, they cannot be compared directly. Then, the effect of the Fe content was investigated by comparison between the sample No. h and the sample No. i. As a result, deterioration of elongation per 1 mass% of the Fe content was (43.1 - 37.4)/(0.3-0.1) = 28.50%.

Then, based on the amount of deterioration in elongation per 1 mass% of the Cu content (5.87%), the ratio (coefficient) for the amount of deterioration of elongation per 1 mass% of each of other alloying elements (Fe, Ni, Sn) was calculated based thereon. As a result, the ratio was 28.50/5.87 = 4.9 for Fe, 7.35/5.87 = 1.3 for Ni, and 2.87/5.87 = 0.5 for Sn.

Then, when the value of the maximum allowable amount of Cu in a case where only Cu is contained as the alloying element was calculated based on the values in Table 2, it was 1.6% with the lower limit value of elongation being assumed as about 35%. That is, since the value corresponding to 1.6% Cu is the maximum allowable content (upper limit value) of the alloying elements in order to ensure 35% or more elongation, the following formula (1) was determined.

$$Cu + 4.9Fe + 1.3Ni + 0.5Sn \leq 1.6 \cdots\cdots (1)$$

in which Cu, Fe, Ni and Sn each represent the content (mass%) of the respective elements in the titanium alloy in the formula (1).

When the P-containing compound is used as the P source in the invention, it is preferred to add Sn so as to satisfy the formula (1) and control the addition amount of the P-containing compound as the P source (one or more of P-Cu mother alloy, P-Fe mother alloy, P-Ni mother alloy). The individual amounts of Cu and Fe and Ni are not particularly restricted but it may suffice that they satisfy the formula (1). In the formula (1), values in the terms for not used elements are zero.

In the invention, the Cu content is preferably 0.3 mass% or less. This can further improve the scale deposition inhibiting property. In Example 1 to be described later, the scale deposition inhibiting property is evaluated as excellent when the scale deposition amount is 1/2 or less of that of the conventional material (Industrial Pure Titanium) (JIS first grade)). When Cu is contained, more excellent scale deposition inhibiting property, that is, 1/3 or less of the scale deposition amount of the conventional material can be ensured by restricting the Cu content to 0.30 mass% or less. The Cu content is, more preferably, 0.20 mass% or less and, further preferably, 0.15 mass% or less.

Further, with a view point of obtaining a higher scale deposition inhibiting effect, an average crystal grain size of the titanium alloy material is preferably 10 μm or more (more preferably, 12 μm or more). This can further improve the scale deposition inhibiting property. Although the mechanism has not yet been analyzed sufficiently, it is conjectured as described below. With a view point of obtaining a high scale deposition inhibiting effect, it is preferred that the average crystal grain size of the titanium alloy material is larger but the upper limit thereof is about 100 μm in order to maintain the state of the material surface satisfactory.

The P-Sn-Ti alloy is prepared by melting the mother alloy of P and other materials (for example, pure titanium) together. The solubility of P in this case is such that (solubility in the liquid phase of titanium) > (solubility in the β-phase of titanium) > (solubility in the α-phase of titanium), in which a portion of P in the material precipitates to crystal gain boundaries, etc. while the remaining portion is solid-solubilized in a super saturated state. P solid-solubilized in the titanium crystal grains is protected by a passivation film of titanium and cannot contribute to the external reaction. That is, P solid-solubilized in the titanium crystal grains cannot sufficiently provide the scale deposition inhibiting effect. On the contrary, P precipitated to the crystal grain boundaries sufficiently provides the scale deposition inhibiting effect. Further, it is considered that as the crystal grain size is larger and the area of the crystal grain boundary is smaller, concentration of P precipitated in the crystal grain boundaries is higher. That is, as the crystal grain size is larger, the concentration of P providing the scale deposition inhibiting effect increases more and the scale deposition inhibiting effect increases more.

When the titanium alloy material of the invention is used, for example, at least to a portion of a heat exchanger, seawater evaporator, etc. in which the deposition of scale comprising calcium carbonate described above as the main ingredient imposes a problem, that is, to a heat transfer portion where a medium such as water or seawater of much mineral content is caused to flow as a thermal medium, the effect described above can be provided effectively. More specifically, the titanium alloy material is used as a heat exchanging material, for example, in a plate-type heat exchanger or a seawater evaporator to a heat transfer plate having a number of corrugating protrusions formed on the surface of a platy metal material. Further, the effect can also be obtained in the same manner also in a heat exchanger or a seawater evaporator which uses the metal material formed into a tubular shape as a heat transfer pipe.

Then, the method of producing the titanium alloy material of the invention is to be described. In the invention, when the titanium alloy material is produced by melting and casting the melting material and then performing at least hot working (bloom forging or bloom rolling, hot rolling), a P-containing compound is melted together with titanium as the melting material in the melting step. As described above, since elemental P has high vapor pressure and reactivity, it is difficult to be added by an existent titanium alloy melting method. However, the titanium alloy material containing P can be produced efficiently by using the P-containing compound as a P source for the starting material.

As described above, the P-containing compound includes, in addition to the Ti-P mother alloy, the Sn-P mother alloy, Cu-P mother alloy, Fe-P mother alloy, and Ni-P mother alloy which are inexpensive, easily available, and can be industrially used easily due to P contained at a high concentration. "P-containing compound" in the invention means those compounds containing P in an amount of 0.15 mass% or more. Specifically, they include, for example, Sn-5 mass% P. Cu-15 mass% P, Cu-8 mass% P, Fe-20 mass% P, Ni-20 mass% P, and Ti-39 mass% P.

Further, when producing the titanium alloy material by melting and casting the melting material, and performing at least hot working (bloom forging or bloom rolling, hot rolling), the titanium alloy material can be produced without causing cracking by setting the heating temperature of the bloom forging or bloom rolling to 890°C or higher.

P tends to form precipitates in titanium (P precipitates) and P precipitates tend to increase locally by solidifying segregation in ingots (cast ingots) after melting. When hot working is applied to an ingot in which P precipitates are increased locally, cracks tend to be caused upon working due to the P precipitates increased locally (segregation). Particularly, since the effect of segregation increases as the size of the ingot is larger, inhibition of cracking is necessary in the subsequent hot working (forging, etc.). Further, the P precipitates increase more as the P content increases. Accordingly, it is considered that P precipitates increase tending to also cause cracking as the P content is higher.

By the way, while P is less solid-solubilized in the α phase and tends to form precipitates, it is solid-solubilized in the β-phase though in a trace amount. Further, the diffusion rate in the β-phase of titanium is generally higher than the diffusion rate in the α-phase thereof, and the diffusion rate also increases as the temperature is higher. Accordingly, it is considered that when the structure mainly comprises the β-phase, homogenization proceeds to moderate the effect of segregation. Further, the β-phase shows higher workability than the α-phase.

The present inventors have found that when the heating temperature upon hot working after casting (specifically, bloom forging or bloom rolling) is increased to 890°C or higher, the matrix structure can be transformed into the β-phase of high workability and the effect of the segregation can be moderated, so that working can be applied preferably. The concentration of P solid-solubilized in the β-phase is extremely low and it is considered that P-precipitates remain even when the heating temperature is high in the material containing P at a high concentration in the invention. However, it is considered that since the structure mainly comprises the β-phase of high workability at the heating temperature described above, it is considered that hot working (bloom forging or bloom rolling) can be performed satisfactorily.

The heating temperature is preferably 900°C or higher. Since oxidation proceeds if the heating temperature is excessively high, the upper limit of the heating temperature is about 1200°C. The retention time at the heating temperature (heating time) can be, for example, 10 to 20 hours while depending on the size of the material.

The titanium alloy material is preferably heat-treated till the average crystal grain size increases to 10 μm or more, (more preferably, 12 μm or more) after further performing cold rolling after the hot working. The heating temperature of the bloom forging or bloom rolling of the hot working is not particularly restricted.

Scale deposition inhibiting effect is improved further as described above by increasing the average crystal grain size by the heat treatment.

The condition of the heat treatment is not particularly restricted so long as the average crystal grain size of the titanium alloy material is 10 μm or more and the heat treatment is preferably performed under the following conditions with a view point of suppressing oxidation, etc. of the titanium alloy material.

The atmosphere for the heat treatment is, preferably, a vacuum or inert gas atmosphere so as to suppress oxidation of the titanium alloy material. In the vacuum atmosphere, the pressure of the atmosphere is preferably $1 \times 10^{-1}$ Pa or lower and, more preferably, $1 \times 10^{-2}$ Pa or lower. Further, after removing an impurity gas till reaching the state of vacuum described above, an inert gas such as Ar may be introduced and the heat treatment may be applied in an inert gas atmosphere. Particularly, when the size of the material subjected to the heat treatment is large, use of the inert gas is effective for reducing the unevenness of temperature and shortening the cooling time.

The heating temperature during heat treatment (heat treatment temperature) is preferably 620°C or higher and more preferably, 640°C or higher and, preferably, 750°C or lower and, more preferably, 730°C or lower. Further, the heating time during heat treatment (heat treatment time) is preferably 2 hours or more and, more preferably, 12 hours or more and, preferably, 48 hours or less and, more preferably, 36 hours or less. By performing the heat treatment at a relatively low temperature for a long time as described above, P solid solubilized to a super saturation level in the titanium crystal grains precipitates to the grain boundaries and the amount of P that can contribute to the suppression of scale deposition can be increased.

The heat treatment may be performed at any timing so long as it is performed after further cold rolling after the hot working as described above, and the heat treatment may be performed just after cold rolling, as well as by way of another step (for example, intermediate stress-relieving, finish stress-relieving treatment, or pressing) after cold rolling. In the invention, the effect due to the heat treatment can be maintained even after the heat treatment and, further, by way of a step such as pressing. The intermediate stress-relieving treatment or finish stress-relieving treatment performed in the examples to be described later is a heat treatment at a relatively high temperature for a short time but this is not the heat treatment for increasing the average crystal grain size of the titanium alloy material to 10 μm or more. In the invention, the heat treatment for increasing the average crystal grain size of the titanium alloy material to 10 μm or more can be performed instead of the intermediate stress-relieving treatment or finish stress-relieving treatment or in addition to the intermediate stress-relieving treatment or finishing stress-relieving treatment.

The titanium alloy material of the invention can be produced by a customary method for other production conditions described above (hot working other than bloom forging, etc.). Also in a case of manufacturing a heat exchanger, a seawater evaporator, etc. by using the titanium alloy material, a customary method of manufacturing the heat exchanger, the seawater evaporator, or the like can be adopted.

[Example]

The present invention is to be described more specifically with reference to examples but it will be apparent that the invention is not restricted to the following examples but the invention can of course be practiced with appropriate modifications in a range conforming to the purport of the invention described above and to be described later, and all of such modifications are included in the technical scope of the invention.

<Example 1>

Titanium alloys of compositions shown in Table 3 (in which the balance comprises titanium and unavoidable impurities, and blanks in Table 3 show no addition of elements) were produced by an arc melting method to obtain button ingots of 40 mmφ and 20 mm height. Since it is impossible to attain alloying by the arc melting method using the elemental P as described above, alloys were produced by melting using one or more of Cu-P mother alloy, Sn-P mother alloy, Fe-P mother alloy, and Ni-P motor alloy as the P source.

After hot-forging the obtained button ingots under heating at 1,000°C, they were heated to 830°C and hot rolled to a thickness of 4.0 mm. Then, after subjecting the obtained hot rolled materials to stress-relieving heat treatment (800°C × 5 min.), they were shot blasted and then pickled by using nitric hydrofluoric acid to obtain stress-relieved hot rolled sheets of 3.5 mm thickness. Subsequently, cold rolling and intermediate stress-relieving heat treatment at 800°C × 5 min were performed to obtain cold rolled sheets of 0.6 mm thickness. The cold rolled sheets were subjected to finish stress-relieving heat treatment at 800°C × 5 min. Final descaling was performed to obtain a material of 0.5 mm thickness.

Since the stress-relieving heat treatment after cold rolling was performed for a short time and the scales were less formed, the materials were dipped in a salt bath at 400 to 600°C and pickled by using nitric hydrofluoric acid as the final descaling. Further, each stress-relieving heat treatment was performed in atmospheric air and air cooling was adopted for cooling.

By using the obtained titanium alloy materials, the formability (ductility) and the scale deposition inhibiting property were evaluated as described below.

[Evaluation of formability (ductility)]

Tensile test pieces of ASTM E8 sub-size (6 mm width and 32 mm length in a parallel portion) were sampled from the prepared materials of 0.5 mm thickness such that the tensile load axis was in parallel with the rolling direction, and a tensile test was performed according to ASTM tensile test standards often used for titanium materials to determine elongation. In order to shape the material for incorporation into the heat exchanger, at least 35% elongation is necessary in the direction parallel to the rolling direction. Accordingly, in the tensile test, a sample with elongation of 35% or more was evaluated as having high ductility (formability: good) and a sample with elongation of less than 35% was evaluated as having low ductility (formability: poor).

[Evaluation of scale deposition inhibiting property]

Samples (10 mm × 50 mm) were cut out from prepared sheets, and the mass (mass A) of the samples before scale deposition was at first measured. Then, an aqueous solution of sodium hydrogen carbonate and calcium chloride dihydrate (1.5 g/L $NaHCO_3$ + 1.3 g/L $CaCl_2 \cdot 2H_2O$) was prepared and the samples were immersed therein.

One cycle was completed at the instance the aqueous solution was heated from a room temperature to 90°C and temperature was elevated by using a fresh aqueous solution on the next cycle. It took about 6 minutes for the temperature elevation of the test solution to 90°C in one cycle. After performing 10 cycles for each of the samples, the sample was taken out, washed with water and then dried. A mass (mass B) of the sample (after scale deposition) was measured and the deposition amount of scales per area ($mg/m^2$) was calculated based on the difference between the mass A and the mass B. In each of the cases, the measurement was performed for three samples in total to determine an average value for the scale deposition amount.

Since the scale deposition amount in pure titanium for industrial use (JIS first grade) prepared in the same steps as in the production steps described above was 0.44 $mg/cm^2$, scale deposition inhibiting property was evaluated as excellent (good) when the scale deposition amount was one-half or less thereof, that is, 0.22 $mg/cm^2$ or less, and the scale deposition inhibiting property was evaluated as deteriorated (poor) when the scale deposition amount was in excess of 0.22 $mg/cm^2$.

The results of evaluation are shown together in Tale 3.

Table 3

| No. | Composition (mass%) | | | | | Cu+4.9Fe+1.3Ni+0.5Sn (mass%) | Scale deposition inhibiting property | Ductility |
|---|---|---|---|---|---|---|---|---|
| | P | Sn | Cu | Fe | Ni | | | |
| 1 | | 0.01 | | | | 0.005 | poor | good |
| 2 | 0.06 | 0.1 | 0.34 | | | 0.390 | good | good |
| 3 | 0.006 | 0.01 | 0.034 | | | 0.039 | good | good |
| 4 | 0.006 | | 0.034 | | | 0.034 | poor | good |
| 5 | 0.4 | 0.1 | | | | 0.050 | Fractured during rolling | |
| 6 | 0.24 | 0.01 | 1.36 | | | 1.365 | good | good |
| 7 | | 2.0 | | | | 1.000 | poor | good |

(continued)

| No. | Composition (mass%) | | | | | Cu+4.9Fe+1.3Ni+0.5Sn | Scale deposition inhibiting property | Ductility |
| | P | Sn | Cu | Fe | Ni | (mass%) | | |
|---|---|---|---|---|---|---|---|---|
| 8 | 0.18 | 3.42 | | | | 1.710 | good | poor |
| 9 | 0.06 | 1.0 | 0.34 | | | 0.840 | good | good |
| 10 | 0.12 | 2.28 | | | | 1.140 | good | good |
| 11 | 0.06 | 0.1 | | 0.17 | | 0.883 | good | good |
| 12 | 0.06 | 0.1 | | | 0.34 | 0.492 | good | good |
| 13 | 0.36 | 0.01 | 2.04 | | | 2.044 | good | poor |

In view of Table 3, it can be considered as below.

No. 1 shows an example of adding only Sn and no scale deposition inhibiting effect can be obtained since the sample does not contain P. The scale deposition inhibiting effect cannot be obtained when only the amount of Sn is increased without incorporation of P as shown in No. 7.

No. 2 shows an example of using the Cu-P mother alloy as the P source, which is excellent in both of the characteristics of the scale deposition inhibiting property and the formability since P, Sn, and Cu are within the defined range.

No. 3 shows an example in which each of the contents of P, Sn and Cu is 1/10 of that of the content in No. 2. It can be seen from No. 3 that excellent scale deposition inhibiting property and formability can be ensured also in a case where the content of each of the elements is small within the defined range. Although not illustrated in Table 3, the elongation of No. 2 was 47.7%, whereas elongation of No. 3 was 50.1% and high ductility is obtained in No. 3 since the entire alloy addition content is smaller. It is considered that the scale deposition inhibiting effect can be obtained even at an extremely low content of P as in No. 3, because P is scarcely solid solubilized in the titanium alloy but present as precipitates irrespective of the P content (existent form is identical irrespective of the P content).

No. 4 shows an example containing P but with no addition of Sn. It can be seen that the scale deposition inhibiting effect cannot be obtained when only P is contained but S is not contained.

No. 5 shows an example in which the content of P is excessive (0.4%). In the material of No. 5, cracking occurred during rolling. Since the amount of Sn was kept low in No. 5, it is considered that cracking occurred due to increase of $Ti_3P$ precipitates by increase in the P content.

No. 6 shows an example in which the content of P and Cu are relatively high. $Ti_3P$ precipitates increased remarkably as the P content was higher but an aimed high ductility of 35% or higher was obtained when the P content was 0.24% and the Cu content was 1.36% as in No. 6.

No. 8 was deteriorated in the ductility since Sn was contained in excess and also the formula (1) was not satisfied.

In No. 13, since P was contained in excess and also the formula (1) was not satisfied, excellent ductility was not obtained.

No. 9 shows an example in which the amount of Sn is 10 times that in No. 2. Since the defined composition was satisfied, it is excellent in the scale deposition inhibiting property and the ductility.

As shown in No. 10, No. 11, and No. 12, it can be seen that excellent scale deposition inhibiting property can be obtained by adding P and Sn also in a case of using other materials than the Cu-P mother alloy (No. 10: Sn-P mother alloy, No. 11: Fe-P mother alloy, and No. 12: Ni-P mother alloy) as the material for the P source.

<Example 2>

Then, the effect of the Cu content on the scale deposition inhibiting property was examined.

Materials of 0.5 mm thickness (titanium alloy materials) were obtained in the same manner as in Example 1 except for melting titanium alloys of compositions shown in Table 4 (balance comprises titanium and unavoidable impurities. Blanks in Table 4 show that elements are not added). In the same manner as in Example 1, scale deposition amount for each of the materials was determined. In this example, the average value of the scale deposition amount was used as it was for the evaluation. The results are shown together in Table 4. No. 1 in Table 4 shows industrial pure titanium (JIS first grade) produced by the same step as the production step described above for reference. Further, No. 5 in Table 4 is identical with No. 10 in Table 3, and No. 7 in Table 4 is identical with No. 2 in Table 3. No. 9 in Table 4 is identical with No. 11 in Table 3, and No. 11 in Table 4 is identical with No. 12 in Table 3.

Table 4 gathers the result of evaluation on the deposition inhibiting property of alloys produced by using different mother alloys as the P source (each of the materials belongs to the example).

Table 4

| No. | Composition (mass%) | | | | | Cu+4.9Fe+1.3Ni+0.5Sn | Deposition amount |
|---|---|---|---|---|---|---|---|
| | P | Sn | Cu | Fe | Ni | (mass%) | (mg/cm$^2$) |
| 1 | | | | | | 0.000 | 0.44 |
| 2 | 0.006 | 0.114 | | | | 0.057 | 0.14 |
| 3 | 0.03 | 0.57 | | | | 0.285 | 0.12 |
| 4 | 0.06 | 1.14 | | | | 0.570 | 0.14 |
| 5 | 0.12 | 2.28 | | | | 1.140 | 0.12 |
| 6 | 0.03 | 0.1 | 0.17 | | | 0.220 | 0.14 |
| 7 | 0.06 | 0.1 | 0.34 | | | 0.390 | 0.21 |
| 8 | 0.12 | 0.1 | 0.68 | | | 0.730 | 0.20 |
| 9 | 0.06 | 0.1 | | 0.17 | | 0.883 | 0.11 |
| 10 | 0.09 | 0.1 | | 0.26 | | 1.324 | 0.12 |
| 11 | 0.06 | 0.1 | | | 0.34 | 0.492 | 0.13 |

In Example 1, the scale deposition inhibiting property was evaluated depending on whether the scale deposition amount was 0.22 mg/cm$^2$ or less, i, e, 1/2 of that of a usual material. It was found that the scale deposition amount could be decreased to 0.146 mg/cm$^2$ or less, i, e, 1/3 of that of the usual material by decreasing the Cu content to 0.3% or less.

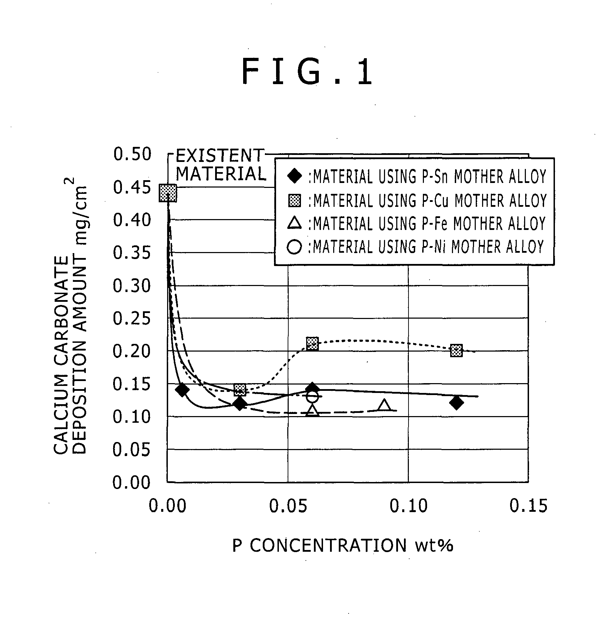

Fig. 1 is a graph arranging the result of Table 4 in which the abscissa denotes the P content. Decrease in the deposition amount is observed for alloys in which P is added even by a trace amount. However, increase in the deposition amount, that is, deterioration of the deposition inhibiting effect is observed for the material prepared by using the Cu-P mother alloy at a P content of 0.06% or more and at a Cu content of 0.34% or more. Since such deterioration of the deposition inhibiting effect is not observed in other materials, it may be supposed that excess Cu deteriorates the deposition inhibiting effect. Accordingly, the Cu content is preferably 0.3% or less in order to obtain high deposition inhibiting effect (deposition amount is decreased to 1/3 or less of that of the usual material).

<Example 3>

Then, the effect of the heating temperature of forging on cracking caused by forging was investigated.

Button cast ingots (40 mmφ, 20 mm height) were obtained in the same manner as in Example 1 except for melting titanium alloys of the compositions shown in Table 5 (balance comprises titanium and unavoidable impurities. Blanks in Table 5 show that elements are not added).

Table 5 gathers the result for the occurrence of cracking when prepared cylindrical button ingots were heated at various temperatures for 2 hours and fabrication at 80% compression was performed in the diametrical direction of the cylinder.

Table 5

| No. | Forging temperature (°C) | Composition (mass %) | | | | | Cu+4.9Fe+1.3Ni+0.5Sn (mass%) | Result of forging |
|---|---|---|---|---|---|---|---|---|
| | | P | Sn | Cu | Fe | Ni | | |
| 1 | | 0.006 | 0.114 | | | | 0.057 | good |
| 2 | | 0.03 | 0.57 | | | | 0.285 | good |
| 3 | | 0.06 | 1.14 | | | | 0.570 | poor. cracked |
| 4 | 850 | 0.12 | 2.28 | | | | 1.140 | poor. cracked |
| 5 | | 0.06 | 0.1 | 0.34 | | | 0.390 | poor. cracked |
| 6 | | 0.06 | 0.1 | | 0.17 | | 0.883 | poor cracked |
| 7 | | 0.06 | 0.1 | | | 0.34 | 0.492 | poor. cracked |
| 8 | | 0.006 | 0.114 | | | | 0.057 | good |
| 9 | | 0.03 | 0.57 | | | | 0.285 | good |
| 10 | | 0.06 | 1.14 | | | | 0.570 | good |
| 11 | 900 | 0.12 | 2.28 | | | | 1.140 | good |
| 12 | | 0.06 | 0.1 | 0.34 | | | 0.390 | good |
| 13 | | 0.06 | 0.1 | | 0.17 | | 0.883 | good |
| 14 | | 0.06 | 0.1 | | | 0.34 | 0.492 | good |
| 15 | | 0.006 | 0.114 | | | | 0.057 | good |
| 16 | | 0.03 | 0.57 | | | | 0.285 | good |
| 17 | | 0.06 | 1.14 | | | | 0.570 | good |
| 18 | 1000 | 0.12 | 2.28 | | | | 1.140 | good |
| 19 | | 0.06 | 0.1 | 0.34 | | | 0.390 | good |
| 20 | | 0.06 | 0.1 | | 0.17 | | 0.883 | good |
| 21 | | 0.06 | 0.1 | | | 0.34 | 0.492 | good |

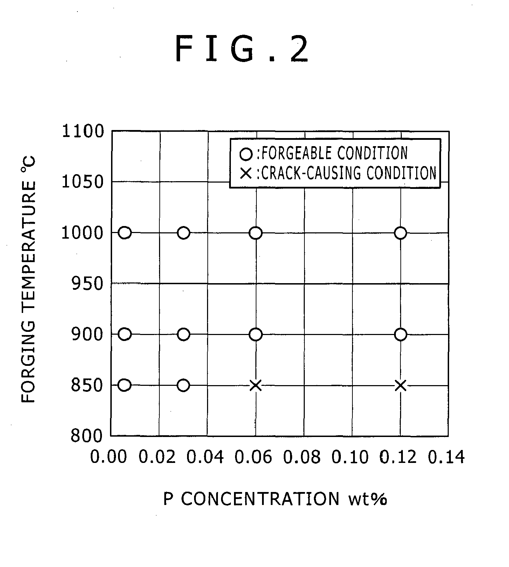

Forging could be performed without occurrence of cracking under the condition of heating to 890°C or higher even when any of alloying elements Sn, Cu, Fe, and Ni was contained. Fig. 2 gathers a relation between the P concentration and the forgeable temperature.

Since the addition amount of the alloying elements is small in the alloys of the invention, the β transformation temperature at which the α phase disappears is substantially identical with the β transformation temperature at 882°C of pure titanium for industrial use. In view of this, it can be seen that forging could be performed for any of the alloys by heating the ingot to a temperature higher than the β transformation point.

While P is less solid solubilized in the α phase, it is solid solubilized into the β phase though in a trace amount. Further, the diffusion rate of titanium in the β phase is generally higher than the diffusion rate in the α phase. It is considered that this proceeds homogenization to moderate the effect of segregation.

It is considered that P is solid solubilized by a trace content in the β phase and precipitates remain in the material, for example, with addition of 0.06wt% or more of P also in a state heated to 950°C, and it is considered that forging was possible since the workability of the mother material in the β phase was high.

Accordingly, with a view point of the productivity and the yield, it is desired that the forging temperature is low. However, it is preferred in the alloys of the invention to perform forging by heating the ingot to the β transformation point or higher in which titanium transforms from the α phase to the β phase, specifically, to 900°C or higher.

<Example 4>

Two titanium alloy materials were obtained by the same method as in Example 1 by using button cast ingots containing P in an amount of 0.06 mass% and Sn in an amount of 1.14 mass% with the balance comprising titanium and unavoidable impurities. Then, in this example, a heat treatment (vacuum stress-relieving treatment) was further applied to one of the obtained titanium alloy materials. Specifically, the cast ingot was applied with a stress-relieving treatment in vacuum at $1 \times 10^{-2}$ Pa or less, at 700°C, for 24 hours and, successively, cooled in an Ar atmosphere at 90 kPa.

By using the titanium alloy material applied with the heat treatment and the titanium alloy material not applied with the heat treatment obtained as described above, an average crystal grain size was measured as described below, and the scale deposition inhibiting property and the formability (ductility) were evaluated by the same method as in Example 1. In this example, the average value for the scale deposition amount was used as it was for the evaluation of the scale deposition inhibiting property. The results of the evaluation are shown together in Table 6.

[Measurement of average crystal grain size]

In an optical microscopic photograph taken at a magnification factor of 400X, 1 to 3 straight lines of 50 mm length were drawn at optional positions so as to pass through 20 or more crystal grains, the number of grain boundaries intersecting the straight lines was counted, and the average crystal grain size was calculated by dividing the length of the straight line on a real scale (50 mm/400 = 125 $\mu$m per one straight line) by the number of grain boundaries intersecting the straight line.

Table 6

| | Average crystal grain size ($\mu$m) | Scale deposition amount (mg/cm$^2$) | Ductility |
|---|---|---|---|
| With vacuum stress-relieving | 13.8 | 0.07 | good |
| Without vacuum stress-relieving | 5.7 | 0.14 | good |

It can be seen from Table 6 that the average crystal grain size is larger and the scale deposition amount was outstandingly decreased in the titanium alloy material applied with the heat treatment compared with the titanium alloy material not applied with the heat treatment.

**Claims**

1. A titanium alloy material comprising:

   P in an amount of 0.005 to 0.30 mass% and Sn in an amount of 0.01 to 3.0 mass% with the balance of Ti and unavoidable impurities.

2. The titanium alloy material according to claim 1, further comprising one or more elements selected from the group consisting of Cu, Fe, and Ni and satisfying the following formula (1):

$$\mathrm{Cu} + 4.9\mathrm{Fe} + 1.3\mathrm{Ni} + 0.5\mathrm{Sn} \leq 1.6 \cdots\cdots (1)$$

   in which Cu, Fe, Ni and Sn each represent the content (mass%) of the respective elements in the titanium alloy in the formula (1).

3. The titanium alloy material according to claim 1, wherein the Cu content is 0.3 mass% or less.

4. The titanium alloy material according to claim 1, wherein an average crystal grain size is 10 $\mu$m or more.

5. The titanium alloy material according to any one of claims 1 to 4, which is used in a heat exchanger or a seawater evaporator.

6. A heat exchanger or a seawater evaporator in which the titanium alloy material according to any one of claims 1 to 4 is used for a heat transfer portion where water or seawater is caused to flow as a thermal medium.

7. A method of producing the titanium alloy material according to any one of claims 1 to 4, wherein a P-containing compound comprising, as a P source, at least one element selected from the group consisting of Sn-P mother alloy, Cu-P mother alloy, Fe-P mother alloy, Ni-P mother alloy, and Ti-P mother alloy is used for the starting material.

8. A method of producing a titanium alloy material according to any one of claims 1 to 4, including melting and casting a melting material and then performing at least hot working in which a P-containing compound is melted together with titanium as the melting material in the melting step.

9. The method of producing the titanium alloy material according to any one of claims 1 to 4, including:

   melting and casting a melting material and then performing at least hot working including bloom forging or bloom rolling in which
   the heating temperature of the bloom forging or bloom rolling is 890°C or higher.

10. A method of producing a titanium alloy material according to any one of claims 1 to 4 including:

    melting and casting a melting material and then performing at least hot working, including:

       a step of heat treating the titanium alloy material till an average crystal grain size increases to 10 $\mu$m or more after further performing cold rolling after the hot working.

# F I G . 1

# FIG.2

Europäisches
Patentamt

European
Patent Office

Office européen
des brevets

# EUROPEAN SEARCH REPORT

Application Number

EP 13 00 2317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/007738 A1 (KOBE STEEL LTD [JP]; ITO YOSHINORI; HAYASHIDA YASUHIRO; MURAKAMI SHOGO) 20 January 2011 (2011-01-20) * the whole document * ----- | 1-10 | INV. C22C14/00 C22F1/18 |

TECHNICAL FIELDS
SEARCHED      (IPC)

C22C
C22F

The present search report has been drawn up for all claims

| Place of search | Date of completion of the search | Examiner |
|---|---|---|
| Munich | 17 October 2013 | Brown, Andrew |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 00 2317

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2013

| Patent document cited in search report | Publication date | Patent family member(s) | | Publication date |
|---|---|---|---|---|
| WO 2011007738 A1 | 20-01-2011 | CN | 102470407 A | 23-05-2012 |
| | | JP | 4681663 B2 | 11-05-2011 |
| | | JP | 2011020135 A | 03-02-2011 |
| | | KR | 20120028387 A | 22-03-2012 |
| | | WO | 2011007738 A1 | 20-01-2011 |

EPO FORM P0459

For more details about this annex : see Official Journal of the European Patent Office, No. 12/82

**EP 2 671 956 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3647843 B